(19) Europäisches Patentamt

European Patent Office

Office européen des brevets

(11) **EP 0 985 677 A1**

(12) **EUROPEAN PATENT APPLICATION**

(43) Date of publication:
**15.03.2000 Bulletin 2000/11**

(51) Int. Cl.[7]: **C07F 17/00**, C08F 10/00

(21) Application number: **98116848.7**

(22) Date of filing: **07.09.1998**

(84) Designated Contracting States:
**AT BE CH CY DE DK ES FI FR GB GR IE IT LI LU MC NL PT SE**
Designated Extension States:
**AL LT LV MK RO SI**

(71) Applicants:
- **INDUSTRIAL TECHNOLOGY RESEARCH INSTITUTE**
  **Chutung, Hsinchu 31015 (TW)**
- **CHINESE PETROLEUM CORPORATION**
  **Taipei 10031 (TW)**
- **Taiwan Synthetic Rubber Corporation**
  **Taipei (TW)**

(72) Inventors:
- **Tsai, Jing C.**
  **Kaohsiung (TW)**
- **Liu, Kuang-Kai**
  **Chu-Ren Li, Chu-Pei, Hsinchu Hsien (TW)**
- **Chan, Shui-Hwa**
  **Chen, Miao-Li Hsien (TW)**
- **Wang, Shian-Ji**
  **Hsinchu Hsien (TW)**
- **Young, Mu-Jen**
  **Taipei (TW)**
- **Ting, Chin**
  **Hsinchu (TW)**
- **Hua, Sung-Song**
  **Pao-Chiao, Taipei Hsien (TW)**

(74) Representative:
**Rottmann, Maximilian R.**
**c/o Rottmann, Zimmermann + Partner AG**
**Glattalstrasse 37**
**8052 Zürich (CH)**

(54) **Dinuclear metallocene catalyst for olefin polymerization**

(57) A novel dinuclear Group IV element-bridged metallocene complex is disclosed which is represented by the following formula (I):

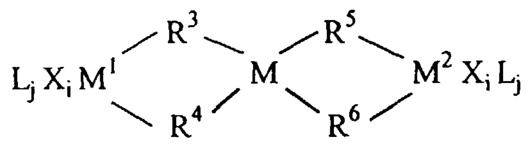

(I)

wherein $R^3$, $R^4$, $R^5$, and $R^6$ are the same or different and each of $R^3$, $R^4$, $R^5$, and $R^6$ is independently a cyclopentadienyl group or a substituted cyclopentadienyl group, M is a Group IV element, $M^1$ and $M^2$ are the same or different and are independently selected from the group consisting of a Group 3, Group 4, and Group 5 transition metal, X is the same or different and is an anion with -1 valence, L is a neutral coordinating group, i is an integer of 1 to 3, j is 0 or 1, and $i + j \leq 3$ . When employing the dinuclear metallocene complex to prepare an olefin polymer, since it has identical or different two catalytic sites, a single or bimodal olefin polymer can be obtained. In addition, when employing the dinuclear metallocene complex to prepare a EPDM, since the angle of the (Cp-centroid)-metal-(Cp-centroid) is smaller, the non-conjugated diene has a lager relative reactivity, thus saving the total production cost of the EPDM.

EP 0 985 677 A1

## Description

### CROSS REFERENCES TO RELATED APPLICATIONS

This is a continuation-in-part of U.S. Patent Application Serial. No. 08/881,897 filed on June 23, 1997, now pending.

### BACKGROUND OF THE INVENTION

**1. Field of the Invention:**

The present invention relates to a novel dinuclear metallocene complex, and more particularly to a Group IV element-bridged metallocene complex which is capable of preparing olefin polymers having a single or bimodal molecular weight distribution.

**2. Description of the Prior Art:**

Olefin-based polymers have been used in a wide range of applications. One most common olefin-based polymers are polyolefins, that is, homopolymers or copolymers of olefins. These polyolefins plastics are typically used in such applications as blow and injection molding, extrusion coating, film and sheeting, pipe, wire and cable.

Most of the physical and mechanical properties of polyolefins, such as the high strength and high impact, stress, and puncture resistances, together with high toughness, are attributed, at least in part, to their relatively high molecular weight. However, as the molecular weight of the resin increases, the processability of the resin usually decreases.

In recent years, it has been found that polyolefins having a multimodal (typically bimodal) molecular weight distribution (MWD) can, not only retain the advantageous properties associated with high molecular weight, but also exhibit improved processability.

A bimodal MWD polymer (which can be also simply referred to as bimodal polymer") is defined as a polymer having two distinct molecular weight distribution curves as observed from the gel permeation chromatography (GPC). In other words, a bimodal polymer can be considered as a mixture containing a first polymer with a relatively higher molecular weight and a second polymer with a relatively lower molecular weight that are blended together.

Various approaches have been disclosed for producing bimodal polyolefins. The simplest approach is to physically blend together two polymers having different molecular weights. However, this simplistic approach suffers from the problem that only with polymers that can be completely molten, homogenization can be obtained. If one of the polymers is not completely molten, then the polymer blend will be inhomogeneous. This can cause a myriad of problems.

U.S. Patent Nos. 5,284,613 and 5,338,589 disclose a two stage polymerization process for preparing a bimodal polyolefin. In the first stage, olefin monomers are contacted with a catalyst under polymerization conditions to produce a relatively high molecular weight (HMW) polymer, wherein the polymer is deposited on the catalyst particles. In the second stage, the HMW polymer containing the catalyst is further polymerized with additional olefin monomers to produce a relatively low molecular weight (LMW) polymer much of which is deposited on and within the HMW polymer/catalyst particles from the first. The disadvantages of such a two stage process are that two reactors are needed, resulting in undesirably high capital investment.

U.S. Patent No. 5,369,194 discloses a process for preparing bimodal polyolefins in a single reactor. The catalyst system so used includes two different transition metal catalysts supported on the same solid support material. Therefore, high and low molecular weight polymers can be formed on the same catalyst particle. The shortcoming is that procedures for preparing the solid support material which is supported with two different catalysts is complicated and difficult. Moreover, the preferable activities for the two different catalysts may be at different conditions. Therefore, when one catalyst is activated, the other catalyst may be inactivated.

Another most common olefin-based polymers are terpolymers of ethylene, propylene, and a non-conjugated diene, which are generally referred to as EPDM elastomers. EPDM elastomers have outstanding weather and acid resistance, and high and low temperature performance properties. Such properties particularly suit EPDMs as an elastomer for use in hoses, gaskets, belts, bumpers; as blending components for plastics and for tire side walls in the automotive industry; and for roofing applications. Additionally, because of their electrical insulation properties, EPDMs are particularly well suited for use as wire and cable insulation.

Various approaches have been disclosed for producing EPDMs using a metallocene catalyst. However, the diene is a more expensive monomer material then ethylene or propylene. Further, the reactivity of diene monomers with metallocene catalysts conventionally used is lower than that of ethylene and propylene. Consequently, to achieve the requisite degree of diene incorporation to produce an EPDM with an acceptably fast cure rate, it has been necessary

to use a diene monomer concentration which, expressed as a percentage of the total concentration of monomers present, is in substantial excess compared to the percentage of diene desired to be incorporated into the final EPDM product. Thus, the total EPDM production cost is inevitably increased.

Floyd et al. in U.S. Patent No. 5,229,478 have tried to increase the reactivity of the diene, conversion rate of the diene and the diene incorporation for preparing EPDMs with a mononuclear biscyclopentadienyl compound as a catalyst, such as ethylene-bridged bis(tetrahydroindenyl) zirconium dichloride. However, the results are not desirably good, and much more efforts still need to be made.

## SUMMARY OF THE INVENTION

The primary object of the present invention is to solve the above-mentioned problems by providing a novel dinuclear metallocene complex which can be used for preparing a single or bimodal olefin polymer using a single reactor. The metallocene complex disclosed in the present invention is bridged by a Group IV element. This creates identical or different two catalytic sites in a single metallocene complex catalyst by proper adjustment of the ligands. Thus, when the metallocene complex has two different catalytic sites, the olefin monomer can be polymerized into a bimodal olefin polymer using a single catalyst in a single reactor, and the catalytic activity of the catalyst is comparable to commercially available catalysts. In addition, whether the metallocene complex has identical or different catalytic sites, since the angle of the (Cp-centroid)-metal-(Cp-centroid) (Cp is a cyclopentadienyl group) of the metallocene complex of the present invention is smaller than that of the conventional one, by using the metallocene catalyst of the present invention, the reactivity of the diene, the conversion rate of the diene, and the diene incorporation are increased, thus saving the total production cost of the EPDM.

To achieve the above-mentioned object, a novel dinuclear metallocene complex is developed in the present invention which is represented by the following formula (I):

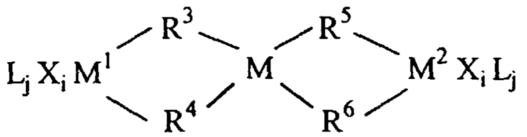

(I)

wherein

$R^3$, $R^4$, $R^5$, and $R^6$ are the same or different and each of $R^3$, $R^4$, $R^5$, and $R^6$ is independently a cyclopentadienyl group or a substituted cyclopentadienyl group,
M is a Group IV element,
$M^1$ and $M^2$ are the same or different and are independently selected from the group consisting of a Group 3, Group 4, and Group 5 transition metal,
X is the same or different and is an anion with -1 valence, which is selected from the group consisting of H, a $C_{1-20}$ hydrocarbon group, a halogen, $C_{1-20}$ alkoxy, $C_{1-20}$ oxyaryl,
$NH_2$, $NHR^7$, $NR^7R^8$, $-(C{=}O)NH_2$, $-(C{=}O)NHR^9$, $-(C{=}O)NR^9R^{10}$, each of $R^7$, $R^8$, $R^9$ and $R^{10}$ being $C_{1-20}$ alkyl,
L is a neutral coordinating group which is selected from the group consisting of amines, phosphorus compounds, ethers, and thioethers,
i is an integer of 1 to 3,
j is 0 or 1, and
$i + j \leq 3$

## DETAILED DESCRIPTION OF THE INVENTION

The present invention discloses a novel dinuclear metallocene complex which is bridged by a Group IV element, and is represented by the following formula (I):

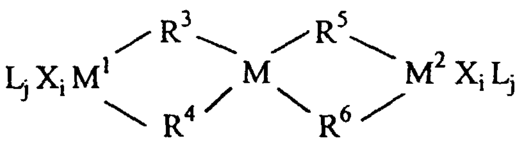

(I)

wherein

$R^3$, $R^4$, $R^5$, and $R^6$ are the same or different and each of $R^3$, $R^4$, $R^5$, and $R^6$ is independently a cyclopentadienyl group or a substituted cyclopentadienyl group,
M is a Group IV element,
$M^1$ and $M^2$ are the same or different and are independently selected from the group consisting of a Group 3, Group 4, and Group 5 metal,
X is the same or different and is an anion with -1 valence, which is selected from the group consisting of H, a $C_{1-20}$ hydrocarbon group, a halogen, $C_{1-20}$ alkoxy, $C_{1-20}$ oxyaryl, $NH_2$, $NHR^7$, $NR^7R^8$, $-(C=O)NH_2$, $-(C=O)NHR^9$, $-(C=O)NR^9R^{10}$, each of $R^7$, $R^8$, $R^9$ and $R^{10}$ being $C_{1-20}$ alkyl,
L is a neutral coordinating group which is selected from the group consisting of amines, phosphorus compounds, ethers, and thioethers,
i is an integer of 1 to 3,
j is 0 or 1, and
$i + j \leq 3$.

$R^3$, $R^4$, $R^5$, and $R^6$ can be independently represented by $C_5R_mH_{5-m}$, wherein R is selected from the group consisting of an alkyl, alkenyl, aryl, alkylaryl, or arylalkyl group having from 1 to 20 carbon atoms, and a silyl group, and m is an integer of 0-5. Examples of the R groups include methyl, ethyl, propyl, butyl, isobutyl, amyl, isoamyl, hexyl, 2-ethylhexyl, heptyl, octyl, vinyl, allyl, isopropenyl, phenyl, tolyl, and the like. Representative examples of such $C_5R_mH_{5-m}$ includes a $\eta^5$-cyclopentadienyl group, a $\eta^5$-methylcyclopentadienyl group, and a $\eta^5$-tetramethylcyclopentadienyl group.
Alternatively, $R^3$, $R^4$, $R^5$, and $R^6$ can be independently a saturated or unsaturated polycyclic cyclopentadienyl group, for example, indenyl, tetrahydroindenyl, fluorenyl, and octahydrofluorenyl.
$M^1$ and $M^2$ can be the same or different. In the case that $M^1$ and $M^2$ are different, whether $R^3$, $R^4$, $R^5$, and $R^6$ are the same or different, $M^1$ and $M^2$ are in a different catalytic environments, that is, two different catalytic sites are created in a single metallocene complex. Thus, by using such metallocene complex, a bimodal olefin polymer, including bimodal polyolefins and bimodal EPDMs, can be obtained.
In the case that $M^1$ and $M^2$ are the same, and $R^3$, $R^4$, $R^5$, and $R^6$ are different, (for example, $R^3$, $R^4$, and $R^5$ are the same, and $R^6$ is different from $R^3$), two different catalytic sites can also be formed. Therefore, by using such metallocene complex, a bimodal olefin polymer can also be formed.
In the case that $M^1$ and $M^2$ are the same, and all of $R^3$, $R^4$, $R^5$, and $R^6$ are also the same, thus, $M^1$ and $M^2$ have the same catalytic environments. Consequently, although the metallocene complex has two catalytic sites, such two catalytic sites are identical, that is to say, only one catalytic site are formed in the metallocene complex. Therefore, by using such metallocene complex as a catalyst, single olefin polymer can be obtained, no bimodal olefin polymer can be obtained.
M is a Group IV element, such as carbon, silicon, germanium, tin, and lead. $M^1$ and $M^2$ can be independently a Group 3, Group 4, or Group 5 metal, such as scandium, yttrium, lanthanum series, titanium, zirconium, hafnium, vanadium, niobium, and tantalum.
For the $X_i$ and $L_j$ groups, X is an anion with -1 valence, therefore, the bonding between X and $M^1$ or $M^2$ is a non-coordinating ionic bond. In the case that the numbers of X is not sufficient to stabilize $M^1$ or $M^2$, an L group is needed to further stabilize $M^1$ or $M^2$. L is a neutral coordinating group and provides lone pair electrons to coordinates with $M^1$ or $M^2$, therefore, the bonding between L and $M^1$ or $M^2$ is a coordinating bond. Suitable L is a compound having an element which can provides a lone pair electrons. Examples of such L include amines, phosphorous compounds, ethers, and thioether, having N, P, or O element to provides a lone pair electrons.
In the case that i=2, and j=0, X is preferably $NH_2$, $NHR^7$, $NR^7R^8$, $-(C=O)NH_2$, $-(C=O)NHR^9$, or $-(C=O)NR^9R^{10}$. Each of $R^7$, $R^8$, $R^9$ and $R^{10}$ is $C_{1-20}$ alkyl. Representative examples of X is $-N(CH_3)_2$ or $-N(C_2H_5)_2$.
In the case that $M^1$ is the same as $M^2$, and $R^3$, $R^4$, and $R^5$ are the same, while $R^6$ is different from $R^3$, according to a preferred embodiment, the metallocene complex of the present invention can be prepared by first reacting $MCl_4$ with $R^3X$ to obtain $M(R^3)_3Cl$, wherein M and $R^3$ are defined as above, and X is an alkaline metal.

Subsequently, the $M(R^3)_3Cl$ so obtained is reacted with $R^6Y$ to obtain $R^6M(R^3)_3$, wherein $R^6$ is defined as above, and Y, which can be the same as or different from X, is an alkaline metal.

Finally, the $R^6M(R^3)_3$ so obtained is reacted with $M^1(X_iL_j)_2$ to obtain the metallocene complex represented by the following formula, wherein $M^1$, $X_i$, and $L_j$ are defined as above:

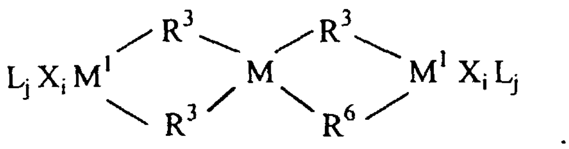

In the case that $M^1$ is the same as $M^2$, and all of $R^3$, $R^4$, $R^5$, and $R^6$ are the same, according to a preferred embodiment, the metallocene complex of the present invention can be prepared by first reacting $MCl_4$ with $R^3X$ to obtain $M(R^3)_4$, wherein M and $R^3$ are defined as above, and X is an alkaline metal.

Subsequently, the $M(R^3)_4$ so obtained is reacted with $M^1(X_iL_j)_2$ to obtain the metallocene complex represented by the following formula, wherein $M^1$, $X_i$, and $L_j$ are defined as above:

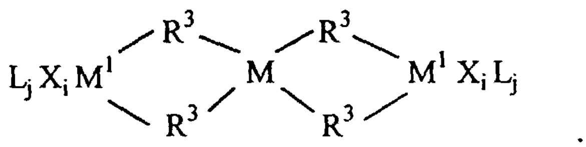

Taking as an example to facilitate better understanding, referring to formula (I), when $R^3$, $R^4$, and $R^5$ are the same and are Cp (cyclopentadienyl), $R^6$ is methylcyclopentadienyl, i=2, j=0, X is $NMe_2$ [$N(CH_3)_2$], M is Sn, and $M^1$ is the same as $M^2$ and is Zr, the above-mentioned process for preparing the metallocene complex of formula (I) can be summarized by the following three reactions:

$$SnCl_4 + 3\ CpLi \rightarrow SnCp_3Cl + 3\ LiCl$$

$$SnCp_3Cl + Cp'K \rightarrow Cp'SnCp_3 + KCl$$

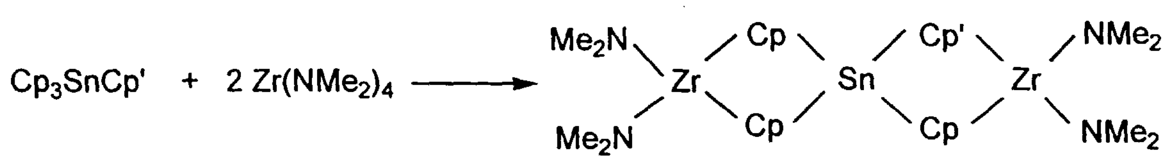

In the present invention, the binuclear metallocene complex can be combined with an activating cocatalyst to form a catalyst composition, which can be used for preparing olefin polymers.

The activating cocatalyst can be methyl aluminoxane (MAO), a trialkyl aluminum, a dialkyl aluminum, a salt of an inert and non-coordinating anion, or a mixture thereof.

The trialkyl aluminum can be selected from the group consisting of trimethyl aluminum, triethyl aluminum, tripropyl aluminum, trisopropyl aluminum, tributyl aluminum, and triisobutyl aluminum (TIBA).

The inert and non-coordinating anion can be a borate. Borates that are suitable for use in the present invention include N,N-dimethyl anilinium tetrakis(pentafluorophenyl)borate, triphenyl carbenium tetrakis(pentafluorophenyl)borate, trimethyl ammonium tetrakis(pentafluorophenyl)borate, ferrocenium tetrakis(pentafluorophenyl)borate, dimethyl ferrocenium tetrakis(pentafluorophenyl)borate, and silver tetrakis(pentafluorophenyl)borate.

Preferably, the activating cocatalyst is methyl aluminoxane, or a mixture of a trialkyl aluminum and a borate.

By using the catalyst composition of the present invention (containing the Group IV element-bridged metallocene complex and the activating cocatalyst), an olefin polymer can be synthesized. At least one olefin monomer and another monomer can be subjected to polymerization under polymerizing conditions in the presence of a catalytically effective amount of the metallocene complex catalyst of the present invention.

Suitable olefin monomers can be ethylene or α-olefins. The polymers to be prepared by the process of the present invention can be homopolymers of ethylene, homopolymers of α -olefins, copolymers of α-olefins, and copolymers of ethylene and α-olefins. Examples of the α-olefins include those olefins having 3 to 12 carbon atoms, such as propylene, 1-butene, 1-pentene, 1-hexene, 1-octene, 1,3-butadiene and 1,5-hexadiene.

More particularly, the catalyst system disclosed in the present invention can be most advantageously used to prepare ethylene homopolymers, including high density polyethylene (HDPE) having broad, bimodal, or multimodal, molecular weight distributions for applications such as high molecular weight films and blow molding.

Also more particularly, the catalyst system disclosed in the present invention can be most advantageously used to prepare a copolymer of ethylene and propylene (EPM). Also, a copolymer of ethylene, a $C_{3-12}$ α-olefin, and a non-conjugated diene can be prepared. More particularly, when the $C_{3-12}$ α-olefin used is propylene, a copolymer of ethylene, propylene, and a non-conjugated diene can be prepared, which referred to as EPDM. The suitable non-conjugated diene can be 5-ethylidene-2-norbornene (ENB), 5-methylene-2-norbornene, 5-vinylidene-2-norbornene, 1,4-hexadiene (HD), or dicyclopentadiene (DCPD).

The novel catalyst system disclosed in the present invention can be used in slurry reaction conditions, gas phase, and solution polymerization reaction conditions. Polymerization is typically carried out at a temperature of 0° to 250°C, and from atmospheric pressure to 3,000 psi.

According to one aspect of the present invention, since the metallocene complex of the present invention is bridged by a Group IV element, two catalytic sites are present in every single metallocene complex catalyst. By the proper adjustment of the dinuclear metals or the ligands coordinating to the metals, two different catalytic sites can be created. Thus, by using such metallocene catalyst, the present invention allows the use of a single reactor and a single catalyst to produce a olefin polymer having a bimodal molecular weight distribution, thus lowering the required capital costs.

According to another aspect of the present invention, the metallocene complex has two metals (i.e., dinuclear), and is bridged by a Group IV element rather than an alkylene group in Floyd et al. Since Ge is smaller than alkylene group ($-C_2H_4-$), thus the distance between the two Cp groups is closer, resulting in that the angle of the (Cp-centroid)-metal-(Cp-centroid) is smaller. Therefore, the angle of the (Cp-centroid)-metal-(Cp-centroid) of the present metallocene complex is smaller than that of the mononuclear metallocene complex of Floyd et al. The angles α and β shown below indicate the angle of the (Cp-centroid)-metal-(Cp-centroid) of the dinuclear metallocene complex of the present invention and that of the mononuclear metallocene complex of Floyd et al, and α < β (about 121° vs. 132°).

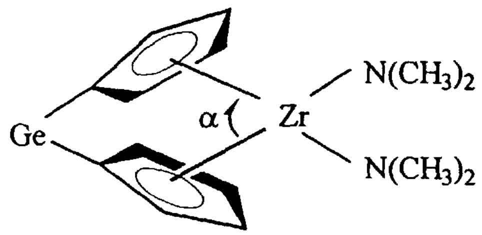

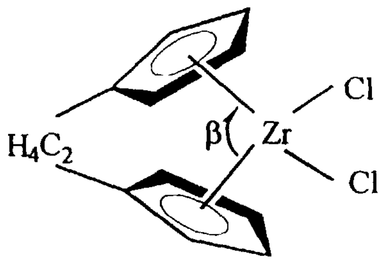

Since $\alpha < \beta$, the catalytic metal of the present invention has a larger opening space, which makes the comonomers have an enhanced relative reactivity. Consequently, by using the dinuclear metallocene catalyst of the present invention, the reactivity of the diene, the conversion rate of the diene, and the diene incorporation rate can be increase, thus saving the total production cost of the EPDM.

The following examples are intended to illustrate the process and the advantages of the present invention more fully without limiting its scope, since numerous modifications and variations will be apparent to those skilled in the art.

All of the following reactions were carried out under nitrogen using Schlenk technique or usual vacuum system such as a glove box. All of the solvents used were distilled to remove sodium under nitrogen and monitored by a moisture sensor. In the examples below, the following definitions are applied: Cp = $\eta^5$-cyclopentadienyl, Cp' = $\eta^5$-methylcyclopentadienyl, $Cp^x$ = $\eta^5$-tetramethylcyclopentadienyl, Me = methyl, and Ind = indenyl.

<u>**Synthesis of Catalysts**</u>

<u>**Examples 1**</u>: Synthesis of $Sn(Cp')_3Cp$ (Compound A)

In a 100 mL round bottom Schlenk flask, Cp i (2.0g, 23.2 mmol) was dissolved in 30 mL of THF and cooled to 0°C. $SnCl_4$ (2.0 g, 7.8 mmol) in 5 mL of THF was canulated to the suspension of Cp i and stirred for 5 hours at room temperature. Solvent was evaporated and pentane (15 mL) was added to crash out the resulting salt to give a pale yellow solution. Pentane was evaporated and the resultant solid was re-dissolved in 30 mL of THF and cooled to 0°C. CpLi (0.56 g, 7.8 mmol) in 5 mL of THF was canulated to the solution and stirred for 4 hours at room temperature. Solvent was stripped off and toluene (20 mL) was added to crash out the salt. The final solution was concentrated to give a pale yellow solid in 70% yield.

<u>**Examples 2**</u>: Synthesis of $Sn(Cp')_3CpZr_2(NMe_2)_4$ (Compound B)

Compound A (1.0 g, 3.8 mmol) obtained from Example 1 was dissolved in 30 mL of toluene and $Zr(NMe_2)_4$ (1.4 g, 7.6 mmol) in 5 mL of toluene was added to the solution at room temperature. After overnight stirring, the solvent was evaporated and the resultant solid was re-crystallized from pentane. The final product was a yellow solid and the yield was 72%.

<u>**Examples 3**</u>: Synthesis of $Ge(Cp')_3Cp^x$ (Compound C)

In a 100 mL round bottom Schlenk flask, Cp i (2.0g, 23.2 mmol) was dissolved in 30 mL of THF and cooled to 0°C. $GeCl_4$ (1.67 g, 7.8 mmol) in 5 mL of THF was canulated to the suspension of Cp i and stirred for 5 hours at room temperature. Solvent was evaporated and pentane (15 mL) was added to crash out the resulting salt to give a pale yellow solution. Pentane was evaporated and the resulting solid was re-dissolved in 30 mL of THF and cooled to 0°C. $Cp^xLi$ (1.0 g, 7.8 mmol) in 5 mL of THF was canulated to the solution and stirred for 4 hours at room temperature. Solvent was stripped off and toluene (20 mL) was added to crash out the salt. The final solution was concentrated to give a pale yellow solid in 75% yield.

<u>**Examples 4**</u>: Synthesis of $Ge(Cp')_3Cp^xZr_2(NME_2)_4$ (Compound D)

Compound C (1.0 g, 2.6 mmol) obtained from Example 3 was dissolved in 30 mL of toluene and $Zr(NMe_2)_4$ (1.37 g, 5.12 mmol) in 5 mL of toluene was added to the solution at room temperature. After overnight stirring, the solvent was evaporated and the resulting solid was re-crystallized from pentane. The final product was a yellow solid and the yield was 65%.

<u>**Examples 5**</u>: Synthesis of $GeCp_3Cp'$ (Compound E)

In a 100 mL round bottom Schlenk flask, CpLi (2.0g, 27.7 mmol) was dissolved in 30 mL of THF and cooled to 0°C. $GeCl_4$ (1.98 g, 9.26 mmol) in 5 mL of THF was canulated to the suspension of CpLi and stirred for 5 hours at room temperature. Solvent was evaporated and pentane (15 mL) was added to crash out the resulting salt to give a pale yellow solution. Pentane was evaporated and the resulting solid was re-dissolved in 30 mL of THF and cooled to 0°C. Cp i (0.79 g, 9.26 mmol) in 5 mL of THF was canulated to the solution and stirred for 4 hours at room temperature. Solvent was stripped off and toluene (20 mL) was added to crash out the salt. The final solution was concentrated to give a pale yellow solid in 72% yield.

**Example 6**: Synthesis of $Ge(Cp')_3CpZr_2(NMe_2)_4$ (Compound F)

Compound E (1.0 g, 2.95 mmol) obtained from Example 5 was dissolved in 30 mL of toluene and $Zr(NMe_2)_4$ (1.58 g, 5.9 mmol) in 5 mL of toluene was added to the solution at room temperature. After overnight stirring, the solvent was evaporated and the resulting solid was re-crystallized from pentane. The final product was a yellow solid and the yield was 70%.

**Example 7**: Synthesis of $Ge(Ind)_4$ (Compound G)

Indene (5.8 g; 50 mmole) was dissolved in 20 mL of THF and was cannulated to a NaH (1.8 g; 75 mmole)/THF (60 mL) suspension at 0°C. When the addition was completed, the reaction mixture was warmed up to room temperature and stirred overnight. Solvent was removed and the solid residue was washed with pentane to give a off-white solid.

To a 100 mL Schlenk flask, indene $Na^+$ (2g; 14.5 mmole) was suspended in THF and $GeCl_4$ (0.78 g; 3.6 mmole) in 5 mL of THF was cannulated to the suspension at 0°C. When the addition was done, the mixture was allowed to warm up to room temperature and stirred overnight. Solvent was removed and the residue was redissolved in pentane and filtered to remove the salt. The filtrate was concentrated to give a yellow solid (1.5 g; 78% yield).

**Example 8**: Synthesis of $[Ge(Ind)_4][Zr(NMe_2)_2]_2$ (Compound H)

To a 100 mL Schlenk flask, $Zr(NMe_2)_4$ (1g; 3.74 mmole) was dissolved in 50 mL of toluene. $Ge(Ind)_4$ (1g; 1.87 mmole) in 20 mL toluene was then cannulated to this solution at room temperature. The mixture was then refluxed for 6 hours. The solvent was removed under vacuum and the solid was recrystallized in pentane/toluene mixed solvent at -30°C to give the desired product (0.8 g; 46% yield).

**Polymer Synthesis**

**Examples 9-14**: Synthesis of homopolymer or copolymer of ethylene

Polymerization of ethylene with or without co-monomer of 1-hexene was carried out in a 450 mL Parr high pressure reactor. The reactor vessel was thoroughly washed and dried at 110°C for 8 hours before use. Before charging the reactants, nitrogen gas was introduced to purge oxygen from the reactor. The reactor temperature was adjusted to about 50°C-100°C, then 200 mL of toluene, which had been distilled and degassed, was added. Thereafter, $1.5\times10^{-3}$ mole of methyl aluminoxane dissolved in 4 mL of toluene was charged into the reactor, followed by addition of $1\times10^{-3}$ mmol of the catalyst (Compound B, D, or F) dissolved in 4 mL of toluene. The amount of the cocatalyst/catalyst was set at about 2500 (mole-Al/mole-catalyst). After stirring at 50°C for 5 minutes, ethylene gas (or ethylene gas and hexene gas) at 150 psi was introduced into he reactor and the reaction was continued for 30 minutes.

After the completion of the polymerization reaction, the ethylene pressure was released. Then 10 mL of isopropanol was charged into the reactor so as to deactivate the catalyst/cocatalyst. After filtration and drying (at 110°C for 18 hours), a polyethylene product was obtained. The activity of the catalyst was expressed by g-polymer/g-cat.-hr (g of polymer per g of catalyst per hour).

The reaction data, including the catalytic activity, Mw (molecular weight), MWD(molecular weight distribution), were summarized in Table 1.

**Examples 15-16**:

EPM/EPDM polymerization reactions were carried out in a 2 L autoclave reactor. The reactor was pressurized with 200 psi $H_2$ for leakage detection. The pressure drop which was less than 1 psi during 30 minutes was acceptable. After hydrogen was released and before the reactants was charged, nitrogen gas was introduced for 10 minutes to purge oxygen from the reactor. The reactor was evacuated for 2 hours at 105°C to ensure proper removal of moisture and $O_2$.

The reactor was adjusted to about 50°C-100°C to be stabilized. Then, 1 L of toluene was purged into the reactor with $N_2$ and MAO (methyl aluminoxane) solution was added to it with a syringe. The mixture was stirred for 3 minutes before a non-conjugated diene (ENB) was added to it if needed (this step can be skipped if EPM was to be made). The metallocene catalyst (Compound H) solution was added to the bulk and was mixed for 1 minute before a fixed ratio of ethylene/propylene mixed gas was pressurized into the reactor.

When the reaction ended, the mixed gas inlet valve was closed and the gas left inside the reactor was released, MeOH was added to the homogeneous reaction mixture to help precipitate the final product. The product was

filtered and evacuated/oven dried at 50°C before being tested. The reaction data and results were summarized in Table 2.

The foregoing description of the preferred embodiments of this invention has been presented for purposes of illustration and description. Obvious modifications or variations are possible in light of the above teaching. The embodiments were chosen and described to provide the best illustration of the principles of this invention and its practical application to thereby enable those skilled in the art to utilize the invention in various embodiments and with various modifications as are suited to the particular use contemplated. All such modifications and variations are within the scope of the present invention as determined by the appended claims when interpreted in accordance with the breadth to which they are fairly, legally, and equitably entitled.

Table 1

| Example | Catalyst | Temperature (°C) | Pressure (psi) | Al/Cat. | Reaction time (min) | Comonomer (hexene) (mL) | Mw | MWD | Catalytic activity ( $\times 10^4$ g/g-cat.-hr) |
|---|---|---|---|---|---|---|---|---|---|
| 7 | B | 50 | 150 | 2500 | 30 | - | 384651 | 3.6 | 2.33 |
| 8 | B | 50 | 150 | 2500 | 30 | 10 | 714416/ 12502 (bimodal)* | 15.9 | 12 |
| 9 | D | 70 | 150 | 2500 | 30 | - | 265172 | 3.7 | 6.26 |
| 10 | D | 100 | 150 | 2500 | 30 | - | 297155 | 3.6 | 9.04 |
| 11 | F | 70 | 150 | 2500 | 30 | 25 | 37248 | 3.42 | 8.22 |
| 12 | F | 70 | 150 | 2500 | 30 | - | 102953 | 3.08 | 11.51 |

* two molecular weights

Table 2

| Example | Reaction conditions | | | Properties of the Products | | | | | Catalytic activity (× $10^4$ g/g-cat-hr) |
|---|---|---|---|---|---|---|---|---|---|
| | Catalyst | Ethylene/Propylene ratio | Diene (ENB) (mL) | $T_g$ (°C) | Ethylene (%wt) | Diene (%wt) | Mw | MWD | |
| 15 | H | 33/66 | 0 | -58.01 | 68.6 | 0 | 44429 | 2.96 | 3 |
| 16 | H | 33/66 | 20 | -22 | 82.05 | 7.75 | 121461 | 3.93 | 0.41 |

**Claims**

1. A dinuclear metallocene complex which is represented by the following formula (I):

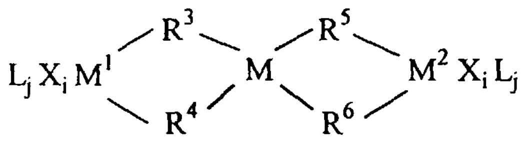

(I)

wherein

$R^3$, $R^4$, $R^5$, and $R^6$ are the same or different and each of $R^3$, $R^4$, $R^5$, and $R^6$ is independently a cyclopentadienyl group or a substituted cyclopentadienyl group,
M is a Group IV element,
$M^1$ and $M^2$ are the same or different and are independently selected from the group consisting of a Group 3, Group 4, and Group 5 transition metal,
X is the same or different and is an anion with -1 valence, which is selected from the group consisting of H, a $C_{1-20}$ hydrocarbon group, a halogen, $C_{1-20}$ alkoxy, $C_{1-20}$ oxyaryl, $NH_2$, $NHR^7$, $NR^7R^8$, $-(C{=}O)NH_2$, $-(C{=}O)NHR^9$, $-(C{=}O)NR^9R^{10}$, each of $R^7$, $R^8$, $R^9$ and $R^{10}$ being $C_{1-20}$ alkyl,
L is a neutral coordinating group which is selected from the group consisting of amines, phosphorus compounds, ethers, and thioethers,
i is an integer of 1 to 3,
j is 0 or 1, and
$i + j \leq 3$

2. The metallocene complex as claimed in claim 1, wherein each of $R^3$, $R^4$, $R^5$, and $R^6$ is independently represented by $C_5R_mH_{5-m}$, wherein

R is selected from the group consisting of an alkyl, alkenyl, aryl, alkylaryl, or arylalkyl group having from 1 to 20 carbon atoms, and a silyl group, and
m is an integer of 0-5.

3. The metallocene complex as claimed in claim 2, wherein each of $R^3$, $R^4$, $R^5$, and $R^6$ is independently selected from the group consisting of a $\eta^5$-cyclopentadienyl group, a $\eta^5$-methylcyclopentadienyl group, and a $\eta^5$-tetramethylcyclopentadienyl group.

4. The metallocene complex as claimed in claim 1, wherein each of $R^3$, $R^4$, $R^5$, $R^6$ is independently a saturated or unsaturated polycyclic cyclopentadienyl group.

5. The metallocene complex as claimed in claim 4, wherein each of $R^3$, $R^4$, $R^5$, $R^6$ is independently selected from the group consisting of indenyl, tetrahydroindenyl, fluorenyl, and octahydrofluorenyl.

6. The metallocene complex as claimed in claim 5, wherein each of $R^3$, $R^4$, $R^5$, and $R^6$ is an indenyl group.

7. The metallocene complex as claimed in claim 1, wherein $M^1$ is the same as $M^2$.

8. The metallocene complex as claimed in claim 7, wherein $R^3$, $R^4$, and $R^5$ are the same, and $R^6$ is different from $R^3$.

9. The metallocene complex as claimed in claim 7, wherein all of $R^3$, $R^4$, $R^5$, and $R^6$ are the same.

10. The metallocene complex as claimed in claim 1, wherein M is selected from the group consisting of carbon, silicon, germanium, tin, and lead.

11. The metallocene complex as claimed in claim 1, wherein each of $M^1$ and $M^2$ is a Group 4 metal.

12. The metallocene complex as claimed in claim 11, wherein each of $M^1$ and $M^2$ is selected from the group consisting of titanium, zirconium, and hafnium.

13. The metallocene complex as claimed in claim 1, wherein

    i=2, j=0, and X is selected from the group consisting of $NH_2$, $NHR^7$, $NR^7R^8$, $-(C{=}O)NH_2$, $-(C{=}O)NHR^9$, $-(C{=}O)NR^9R^{10}$, each of $R^7$, $R^8$, $R^9$ and $R^{10}$ being $C_{1-20}$ alkyl.

14. The metallocene complex as claimed in claim 13, wherein X is selected from the group consisting of $NH_2$, $NHR^7$, and $NR^7R^8$, each of $R^7$ and $R^8$ being $C_{1-20}$ alkyl.

15. The metallocene complex as claimed in claim 14, wherein X is $-N(CH_3)_2$ or $-N(C_2H_5)_2$.

16. A dinuclear metallocene complex catalyst composition for producing an olefin polymer, comprising:

    (a) the metallocene complex catalyst represented by formula (I) as set forth in claim 1; and
    (b) an activating cocatalyst selected from the group consisting of methyl aluminoxane (MAO), a trialkyl aluminum, a dialkyl aluminum, a salt of an inert and non-coordinating anion, and mixtures thereof.

17. The catalyst composition as claimed in claim 16, wherein the trialkyl aluminum is selected from the group consisting of trimethyl aluminum, triethyl aluminum, tripropyl aluminum, trisopropyl aluminum, tributyl aluminum, and triisobutyl aluminum (TIBA).

18. The catalyst composition as claimed in claim 16, wherein the inert and non-coordinating anion is a borate.

19. The catalyst composition as claimed in claim 18, wherein the borate is selected from the group consisting of N,N-dimethyl anilinium tetrakis(pentafluorophenyl)borate, triphenyl carbenium tetrakis(pentafluorophenyl)borate, trimethyl ammonium tetrakis(pentafluorophenyl)borate, ferrocenium tetrakis(pentafluorophenyl)borate, dimethyl ferrocenium tetrakis(pentafluorophenyl)borate, and silver tetrakis(pentafluorophenyl)borate.

20. The catalyst composition as claimed in claim 16, wherein the activating cocatalyst is methyl aluminoxane.

21. The catalyst composition as claimed in claim 16, wherein the activating cocatalyst is a mixture of a trialkyl aluminum and a borate.

22. A process for preparing an olefin polymer, comprising the step of polymerizing at least one olefin with another monomer under polymerizing conditions in the presence of a catalytically effective amount of the dinuclear metallocene complex catalyst composition as set forth in claim 16.

23. The process as claimed in claim 22, wherein ethylene is homopolymerized.

24. The process as claimed in claim 22, wherein ethylene is copolymerized with at least one $\alpha$-olefin having 3 to 12

carbon atoms.

**25.** The process as claimed in claim 24, wherein ethylene is copolymerized with hexene.

**26.** The process as claimed in claim 24, wherein ethylene is copolymerized with propylene.

**27.** The process as claimed in claim 22, wherein an $\alpha$-olefin having 3 to 12 carbon atoms is homopolymerized.

**28.** The process as claimed in claim 22, wherein two or more $\alpha$-olefins having 3 to 12 carbon atoms are copolymerized.

**29.** The process as claimed in claim 22, wherein ethylene, a $C_{3-12}$ $\alpha$-olefin, and a non-conjugated diene are copolymerized.

**30.** The process as claimed in claim 29, wherein the non-conjugated diene is selected from the group consisting of 5-ethylidene-2-norbornene (ENB), 5-methylene-2-norbornene, 5-vinylidene-2-norbornene, 1,4-hexadiene (HD), and dicyclopentadiene (DCPD).

**31.** A process for preparing the metallocene complex of claim 8, comprising the steps of:

(a) reacting $MCl_4$ with $R^3X$ to obtain $M(R^3)_3Cl$,
wherein

M and $R^3$ are defined as above,
X is an alkaline metal;

(b) reacting the $M(R^3)_3Cl$ with $R^6Y$ to obtain $R^6M(R^3)_3$,
wherein

$R^6$ is defined as above,
Y, which is the same as or different from X, is an alkaline metal; and

(c) reacting $R^6M(R^3)_3$ with $M^1(X_iL_j)_2$ to obtain the metallocene complex of claim 8, wherein $M^1$, $X_i$, and $L_j$ are defined as above.

**32.** A process for preparing the metallocene complex of claim 9, comprising the steps of:

(a) reacting $MCl_4$ with $R^3X$ to obtain $M(R^3)_4$,
wherein

M and $R^3$ are defined as above,
X is an alkaline metal; and

(b) reacting the $M(R^3)_4$ with $M^1(X_iL_j)_2$ to obtain the metallocene complex of claim 9, wherein $M^1$, $X_i$, and $L_j$ are defined as above.

European Patent Office

# EUROPEAN SEARCH REPORT

Application Number
EP 98 11 6848

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 779 306 A (HOECHST AG ;MITSUI PETROCHEMICAL IND (JP)) 18 June 1997<br>* the whole document *<br>--- | 1-32 | C07F17/00<br>C08F10/00 |
| X | EP 0 779 295 A (HOECHST AG) 18 June 1997<br>* the whole document *<br>--- | 1-32 | |
| X | EP 0 742 225 A (HOECHST AG)<br>13 November 1996<br>* the whole document *<br>--- | 1-32 | |
| X | EP 0 739 897 A (HOECHST AG)<br>30 October 1996<br>* the whole document *<br>--- | 1-32 | |
| X | EP 0 654 476 A (HOECHST AG) 24 May 1995<br>* the whole document *<br>----- | 1-32 | |

TECHNICAL FIELDS SEARCHED (Int.Cl.6)

C07F
C08F

The present search report has been drawn up for all claims

| Place of search | Date of completion of the search | Examiner |
|---|---|---|
| THE HAGUE | 7 January 1999 | Rinkel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 11 6848

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-1999

| Patent document cited in search report | Publication date | Patent family member(s) | Publication date |
|---|---|---|---|
| EP 0779306 A | 18-06-1997 | DE 19546500 A | 19-06-1997 |
| | | CA 2192771 A | 14-06-1997 |
| | | CN 1151995 A | 18-06-1997 |
| | | JP 9176223 A | 08-07-1997 |
| EP 0779295 A | 18-06-1997 | DE 19546501 A | 19-06-1997 |
| | | AU 7421896 A | 19-06-1997 |
| | | BR 9605977 A | 25-08-1998 |
| | | CA 2192770 A | 14-06-1997 |
| | | CN 1159449 A | 17-09-1997 |
| | | JP 9183788 A | 15-07-1997 |
| | | NO 965328 A | 16-06-1997 |
| EP 0742225 A | 13-11-1996 | DE 19516803 A | 14-11-1996 |
| | | JP 8301883 A | 19-11-1996 |
| EP 0739897 A | 30-10-1996 | DE 19514301 A | 31-10-1996 |
| | | DE 19520599 A | 12-12-1996 |
| | | AU 5080796 A | 07-11-1996 |
| | | CA 2175159 A | 28-10-1996 |
| | | CN 1141925 A | 05-02-1997 |
| | | JP 8295696 A | 12-11-1996 |
| | | NO 961683 A | 28-10-1996 |
| EP 0654476 A | 24-05-1995 | DE 4340018 A | 01-06-1995 |
| | | DE 4344708 A | 29-06-1995 |
| | | DE 4344687 A | 29-06-1995 |
| | | AU 678862 B | 12-06-1997 |
| | | AU 7899194 A | 01-06-1995 |
| | | BR 9404707 A | 01-08-1995 |
| | | CA 2136493 A | 25-05-1995 |
| | | CN 1107162 A | 23-08-1995 |
| | | FI 945486 A | 25-05-1995 |
| | | JP 7215987 A | 15-08-1995 |
| | | NO 944491 A | 26-05-1995 |
| | | US 5585508 A | 17-12-1996 |
| | | US 5693730 A | 02-12-1997 |
| | | US 5776851 A | 07-07-1998 |
| | | ZA 9409285 A | 30-06-1995 |

EPO FORM P0459

For more details about this annex : see Official Journal of the European Patent Office, No. 12/82